# EUROPÄISCHE PATENTSCHRIFT

(11) **EP 2 599 923 B1**
(45) Veröffentlichungstag und Bekanntmachung des Hinweises auf die Patenterteilung: **23.03.2016**
(21) Anmeldenummer: 12007159.2
(22) Anmeldetag: 16.10.2012
(51) Int. Cl.: E02F 9/00, F16C 11/02, F16C 11/04

(54) **Arbeitsgerät mit einem Ausleger**
Work equipment with an extension
Outil de travail avec une console

(30) Priorität: 01.12.2011 DE 102011119940; 02.02.2012 DE 102012002041
(43) Veröffentlichungstag der Anmeldung: 05.06.2013
(73) Patentinhaber: Liebherr-Hydraulikbagger GmbH, 88457 Kirchdorf/Iller (DE)
(72) Erfinder: Wager, Bernd, 88457 Kirchdorf (DE); Schott, Stefan, 87700 Memmingen (DE)
(74) Vertreter: Laufhütte, Dieter

(56) Entgegenhaltungen:
- DE-A1- 2 042 635
- US-A- 4 768 917

## Beschreibung

Die vorliegende Erfindung betrifft ein Arbeitsgerät mit einem Ausleger, wobei der Ausleger an einem Grundgerät des Arbeitsgerätes über eine Bolzenverbindung um eine horizontale Achse schwenkbar gelagert ist. Insbesondere kann der Ausleger dabei an der Drehbühne eines verfahrbaren Arbeitsgerätes über die Bolzenverbindung um eine horizontale Achse schwenkbar angelenkt und über mindestens einen Hydraulikzylinder verschwenkbar sein. Insbesondere kann es sich bei dem Arbeitsgerät dabei um einen Hydraulikbagger mit einem hydraulisch verschwenkbaren Ausleger handeln.

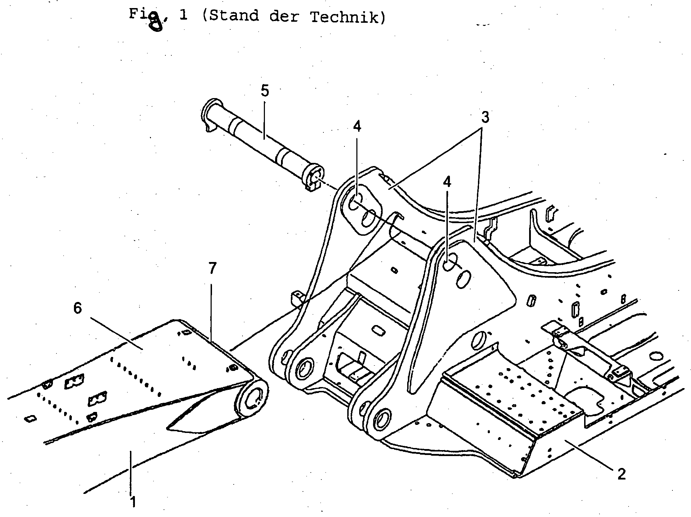

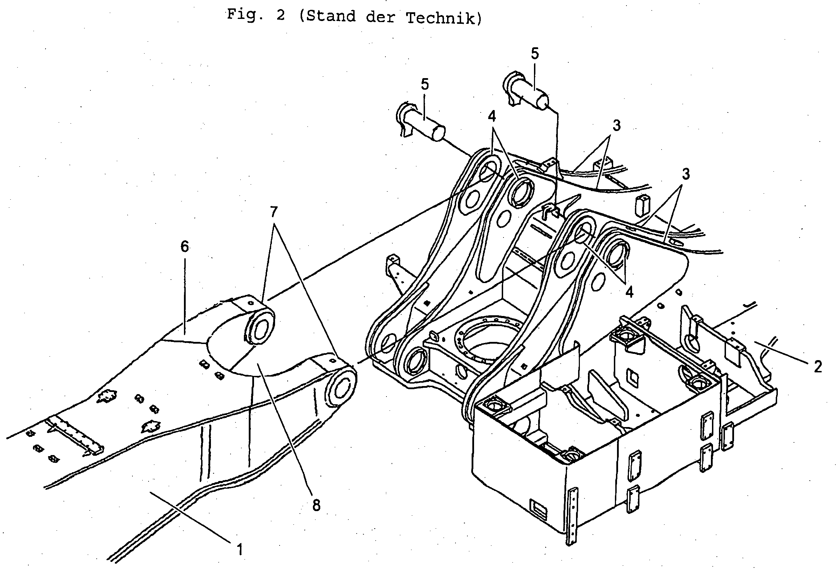

Zur Anlenkung des Auslegers an der Drehbühne sind dabei die beiden in Figuren 1 und 2 dargestellten Lösungen bekannt. Figur 1 zeigt eine zwei-schnittige Lagerung des Auslegers 1 an der Drehbühne 2. Hierfür sind an der Drehbühne 2 zwei Lagerplatten 3 mit entsprechenden Lagerstellen 4 für den Bolzen 5 vorgesehen. Der Bolzen 5 verbindet dabei die Lagerstellen 4 an den Lagerplatten 3 mit dem Lagerrohr 7 an dem hier als Monoblockausleger 6 gezeigten Ausleger 1.

Diese Ausführung hat den Vorteil, dass der als geschlossener Kasten gefertigte Ausleger äußerst verwindungssteif ist. Bei einer Auslegung des Systems für größere Lasten führt die zwei-schnittige Lagerung jedoch zu einer Reihe von Nachteilen, wie beispielsweise zu einem langen, schweren und damit kaum noch handhabbaren Bolzen, zu einer zunehmenden Durchbiegung des Bolzens sowie zu einer hohen Lagerpressung.

Weiterhin ist die in Figur 2 dargestellte vier-schnittige Lagerung bekannt, bei welcher links und rechts an der Drehbühne 2 jeweils zwei parallele Lagerplatten 3 vorgesehen sind, welche jeweils Lagerstellen 4 für einen der beiden Bolzen 5 aufweisen. Der Auslegerfuß des Auslegers 1 ist zur Anlenkung weit gegabelt und weist zwei Lagerhülsen 7 auf, welche über die Bolzen 5 mit den jeweiligen Lagerstellen an den linken bzw. rechten Lagerplatten verbunden werden. Dies hat zur Folge, dass kurze, leichte und entsprechend einfach zu handhabende Bolzen eingesetzt werden können, welche zudem eine geringe Bolzendurchbiegung aufweisen. Weiterhin ist die Lagerpressung entsprechend niedriger. Nachteilig an dieser Lösung ist jedoch die durch die weit gegabelte Ausführung geringere Torsionssteifigkeit des Monoblockfußes 6.

Trotz der seit Jahrzehnten bekannten Nachteile der jeweiligen Lösungen ist eine Anlenkung, welche die Vorteile der beiden Anlenkungen vereint und deren jeweiligen Nachteile vermeidet, bisher nicht gefunden worden.

Aus der DE 20 42 635 A1 ist ein patronenförmiges Scharnier bekannt, das in einer Gelenkverbindung des Hub- und Neigungsmechanismus eines Schaufelladers verwenden lässt.

Der vorliegenden Erfindung liegt die Aufgabe zugrunde, eine verbesserte Anlenkung eines Auslegers am Grundgerät des Arbeitsgerätes zur Verfügung zu stellen.

Diese Aufgabe wird erfindungsgemäß durch ein Arbeitsgerät gemäß Anspruch 1 gelöst.

Das erfindungsgemäße Arbeitsgerät umfasst einen Ausleger, welcher an einem Grundgerät des Arbeitsgerätes über eine Bolzenverbindung um eine horizontale Achse schwenkbar gelagert ist. Erfindungsgemäß erfolgt die Lagerung des Auslegers am Grundgerät nun über drei Lagerplatten mit entsprechenden Lagerstellen für die Bolzenverbindung. Eine solche drei-schnittige Lagerung über drei Hauptstege vereint die Vorteile der zwei- und der vier-schnittigen Lagerung, ohne deren Nachteile aufzuweisen. Erfindungsgemäß erfolgt die Bolzenverbindung über drei Bolzenelemente, wobei sich das mittlere Bolzenelement auf der mittleren Lagerplatte abstützt.

Damit steht durch die vorliegende Erfindung nach jahrzehntelanger Stagnation im Bereich der Anlenkung von Auslegern erstmals eine grundlegend verbesserte Neukonzeption einer solchen Anlenkung zur Verfügung.

Vorteilhafterweise ist die Bolzenverbindung dabei so ausgeführt, dass die Bolzenelemente jeweils von außen nach innen gesteckt werden. Insbesondere werden die beiden Bolzen dabei von außen durch die jeweiligen Lagerstellen der beiden äußeren Lagerplatten gesteckt und an den beiden äußeren Lagerplatten gesichert.

Die Bolzenverbindung erfolgt erfindungsgemäß über drei Bolzenelemente, wobei sich das mittlere Bolzenelement auf der mittleren Lagerplatte abstützt. Hier weist die Lagerstelle an der mittleren Lagerplatte hierfür vorteilhafterweise eine entsprechende Dimensionierung auf, und ist weiterhin vorteilhafterweise über die Dicke der mittleren Lagerplatte auf beiden Seiten hinaus verlängert.

Das mittlere Bolzenelement kann dabei schwimmend an der mittleren Lagerplatte gelagert sein und allein über die äußeren Bolzenelemente, welche an den äußeren Lagerplatten gesichert sind, seinerseits gesichert sein. Alternativ ist jedoch auch eine Sicherung des mittleren Bolzenelementes an der mittleren Lagerplatte denkbar.

Weiterhin können bei der vorliegenden Erfindung die Bolzenelemente über Steckverbindungen miteinander verbindbar sein. Hierdurch ist eine formschlüssige Verbindung der Bolzenelemente untereinander möglich. Dies erlaubt insbesondere eine Zentrierung und/oder Abstützung der einzelnen Bolzenelemente aneinander.

Vorteilhafterweise weisen aneinandergrenzende Stirnseiten der Bolzenelemente dabei einen entsprechenden Vorsprung bzw. eine entsprechende Aussparung auf, so dass der Vorsprung an der einen Stirnseite in eine Aussparung an der anderen Stirnseite einschiebbar ist.

Besonders bevorzugt kommen solche Steckverbindungen dabei beim Einsatz von drei Bolzenelementen zum Einsatz, so dass das mittlere Bolzenelement mit den beiden äußeren Bolzenelementen über die Steckverbindungen verbindbar ist.

Weiterhin kann erfindungsgemäß an der mittleren Lagerplatte eine Lagerstelle zur Anlenkung eines Energierückgewinnungszylinders vorgesehen sein. Die mittlere Lagerplatte erlaubt so einen besonders einfach zu realisierenden Anlenkpunkt für den Energierückgewinnungszylinder, welcher sich von dieser Lagerstelle vorteilhafterweise zum Ausleger hin erstreckt. Die Lagerstelle für den Energierückgewinnungszylinder kann dabei unterhalb der Lagerstelle für die Anlenkung des Auslegers angeordnet sein.

Weiterhin können an den äußeren Lagerplatten jeweils Lagerstellen für die Anlenkung von Hydraulikzylindern zur Bewegung des Auslegers angeordnet sein. Diese können im wesentlichen wie aus dem Stand der Technik bekannt ausgeführt sein, wofür vorteilhafterweise entsprechende zusätzliche Lagerplatten vorgesehen sind, um eine jeweils zwei-schnittige Anlenkung der beiden Hydraulikzylinder zu ermöglichen.

Vorteilhafterweise erstrecken sich die drei Lagerplatten des erfindungsgemäßen Arbeitsgerätes in vertikaler Richtung von einer Tragstruktur des Grundgerätes nach oben. Insbesondere können die drei Lagerplatten dabei parallel zueinander ausgerichtet sein und/oder in Längsrichtung des Arbeitsgerätes verlaufen. Insbesondere steht die Anlenkachse dabei senkrecht auf den drei Lagerplatten.

Weiterhin können die Lagerplatten und ein Tragrahmen des Grundgerätes eine Schweißkonstruktion bilden. Insbesondere handelt es sich dabei bei den Lagerplatten jeweils um Stahlteile, welche an einem Tragrahmen des Grundgerätes angeschweißt sind bzw. ein Teil eines solchen Tragrahmens bilden.

Ebenso kann der Auslegerfuß des erfindungsgemäßen Arbeitsgerätes als eine Schweißkonstruktion ausgeführt sein. Insbesondere handelt es sich dabei erfindungsgemäß um eine geschlossene Kastenkonstruktion.

Der Auslegerfuß weist dabei wie bei einer vier-schnittigen Lagerung vorteilhafterweise zwei Lagerbuchsen auf, welche an der Kastenkonstruktion angeschweißt sind und durch welche die Bolzen zur Verbindung mit den drei Lagerplatten hindurchgehen. Anders als bei einer vier-schnittigen Konstruktion können die beiden Lagerbuchsen jedoch sehr eng beieinander angeordnet sein, so dass der Monoblockfuß nur wenig gegabelt ist und eine entsprechend höhere Steifigkeit aufweist.

Vorteilhafterweise ist dabei der Abstand zwischen den beiden Lagerbuchsen am Ausleger geringer als deren jeweilige Länge. Hierdurch ergibt sich eine entsprechend hohe Stabilität des Auslegers.

Diese Dimensionierung spiegelt sich auch in der Dimensionierung der Lagerstellen der drei Lagerplatten wieder. Insbesondere ist dabei der freie Abstand zwischen der jeweiligen Lagerstelle an einer der äußeren Lagerplatten und der Lagerstelle an der mittleren Lagerplatte größer als die Breite der Lagerstelle an der inneren Lagerplatte.

Die erfindungsgemäße neuartige Anlenkung des Auslegers kommt dabei besonders vorteilhaft bei Arbeitsgeräten mit einem Unterwagen, mit einem Fahrwerk und einem um eine vertikale Drehachse auf dem Unterwagen angeordneten Oberwagen zum Einsatz, wobei der Ausleger am Oberwagen angelenkt ist. Weiterhin kann der Ausleger ein Arbeitswerkzeug tragen. Ebenso kann vorgesehen sein, dass der Ausleger über Hydraulikzylinder bewegbar ist.

Insbesondere kann es sich bei dem erfindungsgemäßen Arbeitsgerät um ein mobiles Arbeitsgerät handeln, beispielsweise um ein Bau-, Erdbewegungs- und/oder Umschlaggerät. Insbesondere handelt es sich bei dem erfindungsgemäßen Arbeitsgerät um einen Hydraulikbagger.

Neben dem Arbeitsgerät, welches aus Grundgerät und Ausleger besteht, umfasst die vorliegende Erfindung weiterhin ein Grundgerät für ein solches Arbeitsgerät. Ein solches Grundgerät weist dabei die erfindungsgemäßen drei Lagerplatten auf.

Vorteilhafterweise ist das Grundgerät dabei so aufgebaut, wie es bereits oben beschrieben wurde.

Die vorliegende Erfindung wird nun anhand von Ausführungsbeispielen sowie Zeichnungen näher beschrieben.

Dabei zeigen:
- Figur 1:: eine zwei-schnittige Lagerung gemäß dem Stand der Technik,
- Figur 2:: eine vier-schnittige Lagerung gemäß dem Stand der Technik,
- Figur 3:: ein Ausführungsbeispiel einer nicht erfindungsgemäßen drei-schnittigen Lagerung mit zwei Bolzenelementen,
- Figur 4 a):: ein Ausführungsbeispiel einer erfindungsgemäßen dreischnittigen Lagerung mit drei Bolzenelementen und

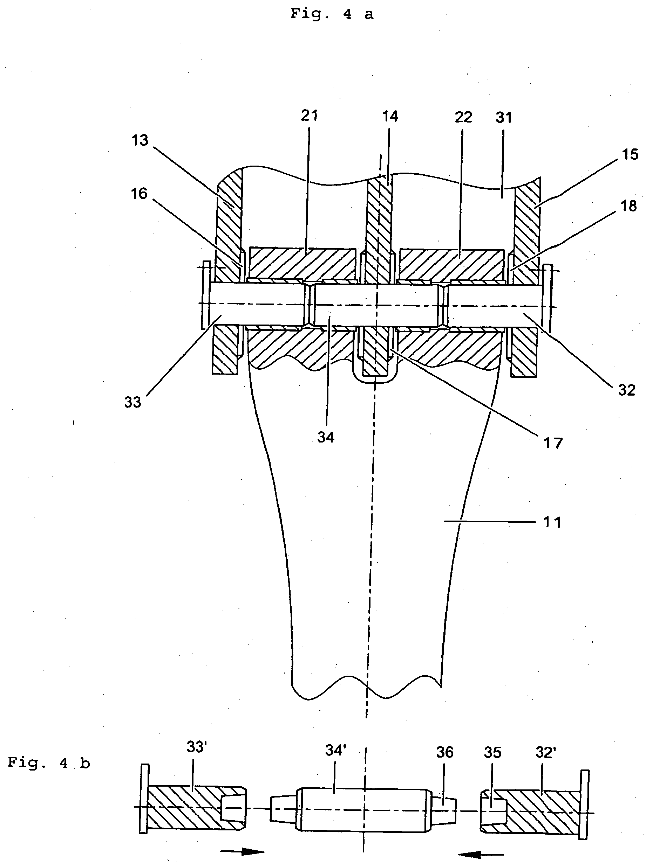

- Figur 4 b):: ein zweiter Ausführungsbeispiel einer erfindungsgemäßen dreischnittigen Lagerung mit drei steckbaren Bolzenelementen.

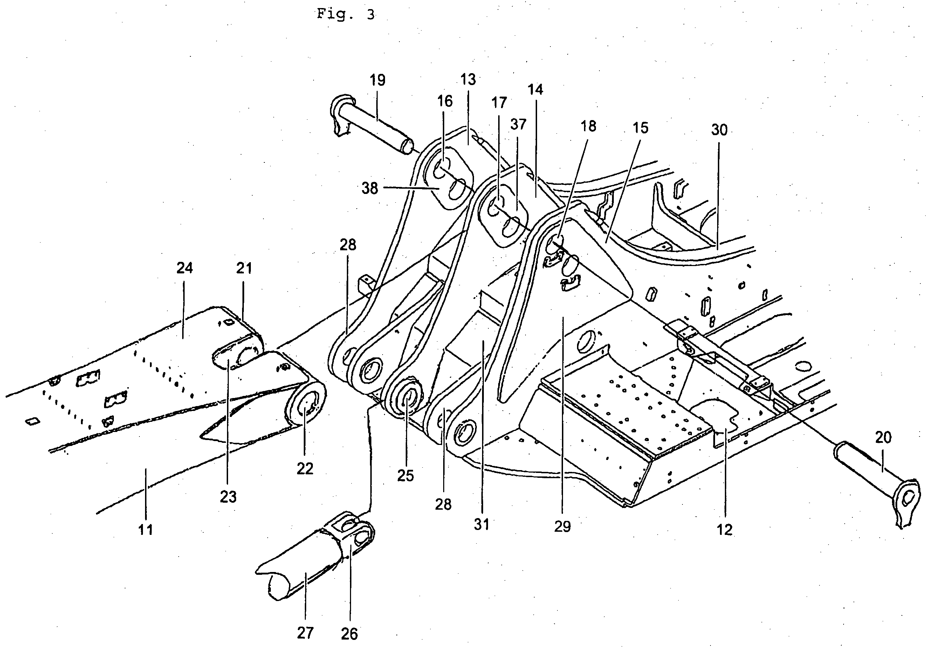

Ein Ausführungsbeispiel einer nicht erfindungsgemäßen drei-schnittigen Anlenkung eines Auslegers 11 an der Drehbühne 12 eines mobilen Arbeitsgerätes ist in Figur 3 dargestellt. Die Drehbühne 12 ist dabei, was in Figur 3 nicht näher dargestellt ist, über eine Drehverbindung um eine vertikale Achse drehbar auf einem Unterwagen angeordnet, welcher das Fahrwerk des mobilen Arbeitsgerätes trägt.

An der Drehbühne 12 sind erfindungsgemäß drei Hauptstege in Form von Lagerplatten 13, 14 und 15 mit entsprechenden Lagerstellen 16, 17 und 18 zur Lagerung des Auslegers 11 vorgesehen. Die Lagerplatten 13 bis 15 können dabei im Bereich der Lagerstellen durch Verstärkungsplatten auf der Innen- und/oder Außenseite verstärkt sein. Eine solche Verstärkungsplatte ist für die Figur 3 rechte Lagerplatte 15 als Element 29 gekennzeichnet. Entsprechende Verstärkungsplatten 37 und 38 für die mittlere Lagerplatte 14 und die linke Lagerplatte 13 sind ebenfalls zu erkennen.

Im Vergleich zu einer zwei-schnittigen Lagerung wird der Ausleger durch das mittige Stützlager 17 nochmals abgestützt. Hierdurch können zwei Bolzen 19 und 20 eingesetzt werden, welche jeweils von außen gesteckt werden. Bei dem in Figur 3 gezeigten Ausführungsbeispiel stützen sich die beiden Bolzenelemente 19 und 20 dabei mit ihren inneren Enden an der Lagerstelle 17 der mittleren Lagerplatte 14 ab und sind mit ihren äußeren Enden jeweils an der äußeren Lagerplatte 13 bzw. 15 gesichert.

Der Auslegerfuß des Auslegers 11 ist als weitgehend geschlossene Kastenkonstruktion 24 ausgeführt, an welcher die beiden Lagerbuchsen 21 und 22 angeordnet sind. Die zur Aufnahme der Lagerplatte 14 notwendige Aussparung 23 zwischen den beiden Lagerbuchsen 21 und 22 kann erfindungsgemäß klein ausfallen. Durch diese geringe Gabelung hat der Auslegerfuß eine erheblich höhere Steifigkeit als der weit gegabelte Auslegerfuß einer aus dem Stand der Technik bekannten vier-schnittigen Lagerung.

Weiterhin ist durch die mittlere Lagerplatte 14 eine einfache Abstützungsmöglichkeit für den Anlenkpunkt 25 eines Energierückgewinnungszylinders 27 oder sonstigen Kraftstellgliedes gegeben. Der Anlenkpunkt 25 kann dabei als Lagerstelle an der Anlenkplatte 14 angeordnet sein, und von einer entsprechenden Gabel 26 am Energierückgewinnungszylinder 27 umfasst werden. Die Lagerstelle 25 kann dabei auf der gleichen Achse angeordnet werden wie die Lagerstellen 28 für die Hydraulikzylinder zum Bewegen des Auslegers, welche an den äußeren Platten 13 und 15 vorgesehen sind und jeweils über weitere Anlenkplatten zwei-schnittig ausgestaltet sind.

Durch die drei-schnittige Lagerung können im Vergleich zu einer zwei-schnittigen Lagerung kürzere und entsprechend leichtere Bolzen eingesetzt werden. Diese weisen zudem eine geringere Bolzendurchbiegung unter Last auf. Zudem ist die Montage der Bolzen erheblich erleichtert, da deren Gewicht geringer ist. Dennoch wird die bei einer vier-schnittigen Lagerung gegebene geringere Steifigkeit des Auslegers vermieden.

Die Lagerplatten 13, 14 und 15 können dabei auf einem Querblech 31 der Drehbühne 12 angeschweißt und zusammen mit diesem eine Schweißkonstruktion bilden. Die beiden äußeren Lagerplatten 13 und 15 sind vorteilhafterweise bis hinter den Bereich des Drehkranzes durchgezogen.

Die drei eingesetzten Lagerplatten verlaufen dabei parallel zueinander in vertikalen Ebenen. Insbesondere können die drei Lagerplatten dabei die gleiche Form aufweisen.

In Figur 4 a) ist nun ein Ausführungsbeispiel der vorliegenden Erfindung gezeigt, welches sich von dem in Figur 3 gezeigten Ausführungsbeispiel lediglich durch den anders gestalteten Bolzen unterscheidet.

Dabei werden in Figur 4 a) drei Bolzenelemente 32, 33 und 34 eingesetzt. Das mittlere Bolzenelement 34 stützt sich an der Lagerstelle 17 der mittleren Lagerplatte 14 ab. Die beiden äußeren Bolzenelemente 32 und 33 sind jeweils von außen in die Lagerstellen 16 bzw. 18 der äußeren Lagerplatten 13 und 15 gesteckt und an diesen gesichert. Die Lagerung des inneren Bolzenelementes 34 kann dabei schwimmend erfolgen, so dass dieses lediglich über die äußeren Bolzenelemente 32 und 33 gesichert ist. Alternativ ist jedoch auch eine Sicherung des inneren Bolzenelementes 34 an der Lagerstelle 17 der mittleren Lagerplatte 14 denkbar. Bei der in Figur 4 a) gezeigten Ausführungsform stoßen die Stirnseiten der einzelnen Bolzenelemente aneinander.

In Figur 4 b) ist eine weitere Ausführungsvariante gezeigt, bei welcher die Stirnseiten der einzelnen Bolzenelemente mit einer formschlüssigen Verbindung ausgestattet sind, welche eine Zentrierung und Abstützung der Bolzenelemente aneinander erlaubt.

Hierfür weist im Ausführungsbeispiel das mittlere Bolzenelement 34' jeweils einen Vorsprung 36 auf seinen beiden Stirnseiten auf, welcher in entsprechende Aussparungen 35 an den Stirnseiten der äußeren Bolzenelemente 32' und 33' eingeschoben werden kann. Die Vorsprünge und Aussparungen können dabei insbesondere rotationssymmetrisch zur Achse der Bolzen ausgeführt sein. Insbesondere können die Aussparung und der Vorsprung dabei jeweils konisch ausgeführt sein, um eine einfache Zentrierung zu ermöglichen.

Eine entsprechende Verbindung der Bolzenelemente ist dabei nicht nur bei einem dreiteiligen Bolzen, sondern auch bei der in Figur 3 gezeigten Ausführung mit zwei Bolzenelementen 19 und 20 denkbar.

Die vorliegende Erfindung ermöglicht durch die drei-schnittige Anlenkung des Auslegers und dementsprechend den Einsatz dreier Hauptstege bzw. Lagerplatte, die Vorteile einer vier-schnittigen Lagerung zu erreichen, ohne deren Nachteile für die Stabilität des Auslegers in Kauf nehmen zu müssen.

## Patentansprüche

1. Arbeitsgerät mit einem Ausleger (11), wobei der Ausleger an einem Grundgerät des Arbeitsgerätes über eine Bolzenverbindung um eine horizontale Achse schwenkbar gelagert ist, wobei die Lagerung des Auslegers am Grundgerät über drei Lagerplatten (13,14,15) mit entsprechenden Lagerstellen für die Bolzenverbindung erfolgt, **dadurch gekennzeichnet, dass** die Bolzenverbindung über drei Bolzenelemente (32,33,34) erfolgt, wobei sich das mittlere Bolzenelement (34) auf der mittleren Lagerplatte (14) abstützt.

2. Arbeitsgerät nach Anspruch 1, wobei die Bolzenelemente über formschlüssige Verbindungen (35,36) miteinander verbindbar sind.

3. Arbeitsgerät nach einem der vorangegangenen Ansprüche, wobei an der mittleren Lagerptatte (14) weiterhin eine Lagerstelle (25) zur Anlenkung eines Energierückgewinnungszylinders (27) oder eines Kraftstellgliedes vorgesehen ist, wobei diese Lagerstelle vorteilhafterweise unterhalb der Lagerstelle für die Anlenkung des Auslegers angeordnet ist, und/oder wobei an den äußeren Lagerplatten (13, 15) Lagerstellen (28) für die Anlenkung von Hydraulikzylindern zur Bewegung des Auslegers angeordnet sind.

4. Arbeitsgerät nach einem der vorangegangenen Ansprüche, wobei die drei Lagerplatten (13,14,15) sich in vertikaler Richtung von einer Tragstruktur des Grundgerätes nach oben erstrecken und/oder parallel zueinander ausgerichtet sind.

5. Arbeitsgerät nach einem der vorangegangenen Ansprüche, wobei der Auslegerfuß des Auslegers (11) als eine weitgehend geschlossene Kastenkonstruktion ausgebildet ist, bei dem die Aussparungen (23) zur Aufnahme der mittleren Lagerptatte (14) möglichst klein, d.h. schmal und kurz ausgebildet sind.

6. Arbeitsgerät nach einem der vorangegangenen Ansprüche, mit einem Unterwagen mit einem Fahrwerk und einem um eine vertikale Drehachse auf dem Unterwagen angeordneten Oberwagen, wobei der Ausleger am Oberwagen angelenkt ist, und/oder wobei der Ausleger ein Arbeitswerkzeug trägt, und/oder wobei der Ausleger über Hydraulikzylinder bewegbar ist und/oder wobei es sich um ein mobiles Arbeitsgerät handelt, insbesondere um ein Bau, Erdbewegungs- und/oder Umschlaggerät, insbesondere um einen Hydraulikbagger.

## Claims

1. An implement with a boom (11), wherein the boom is pivotally mounted about a horizontal axis via a bolt connection on a basic unit (21) of the implement, wherein the mounting of the boom on the basic unit is effected via three bearing plates (13, 14, 15) with corresponding bearing points for the bolt connection, **characterized in that** the bolt connection is effected via three bolt elements (32, 33, 34), with the middle bolt element (34) being supported on the middle bearing plate (14).

2. The implement according to claim 1, wherein the bolt elements are connectable with each other via positive connections (35, 36).

3. The implement according to any of the preceding claims, wherein a bearing point (25) for articulating an energy recovery cylinder (27) or a power actuator is furthermore provided on the middle bearing plate (14), with this bearing point advantageously being arranged below the bearing point for articulating the boom, and/or wherein bearing points (28) for articulating hydraulic cylinders for moving the boom are arranged on the outer bearing plates (13, 15).

4. The implement according to any of the preceding claims, wherein the three bearing plates (13, 14, 15) extend upwards in vertical direction from a support structure of the basic unit and/or are aligned parallel to each other.

5. The implement according to any of the preceding claims, wherein the boom foot of the boom (11) is formed as a largely closed box construction, in which the cutouts (23) for accommodating the middle bearing plate (14) are formed as small as possible, i.e. narrow and short.

6. The implement according to any of the preceding claims, comprising an undercarriage with a traveling gear and an uppercarriage arranged on the undercarriage about a vertical axis of rotation, wherein the boom is articulated to the uppercarriage and/or wherein the boom carries a working tool and/or wherein the boom is movable via hydraulic cylinders and/or wherein the implement is a mobile implement, in particular a construction, earth-moving and/or material-handling machine, in particular a hydraulic excavator.

## Revendications

1. Outil de travail avec une console (11), la console étant montée pivotante sur un axe horizontal sur un appareil de base de l'outil de travail par le biais d'un assemblage par boulon, le montage de la console sur l'appareil de base étant effectué par le biais de trois plaques d'appui (13, 14, 15) dotées de points d'appui correspondants pour l'assemblage par boulon, **caractérisé en ce que** l'assemblage par boulon est effectué par le biais de trois éléments de boulon (32, 33, 34), l'élément de boulon du milieu (34) s'appuyant sur la plaque d'appui du milieu (14).

2. Outil de travail selon la revendication 1, dans lequel les éléments de boulon peuvent être reliés les uns aux autres par le biais de liaisons par complémentarité de formes (35, 36).

3. Outil de travail selon l'une des revendications précédentes, dans lequel, sur la plaque d'appui du milieu (14), est prévu en outre un point d'appui (25) destiné à l'articulation d'un vérin à récupération d'énergie (27) ou d'un actionneur de puissance, ce point d'appui étant disposé de manière avantageuse en dessous du point d'appui pour l'articulation de la console, et/ou des points d'appui (28) étant disposés sur les plaques d'appui extérieures (13, 15) pour l'articulation de vérins hydrauliques pour le mouvement de la console.

4. Outil de travail selon l'une des revendications précédentes, dans lequel les trois plaques d'appui (13, 14, 15) s'étendent dans la direction verticale depuis une structure porteuse de l'appareil de base vers le haut et/ou sont orientées parallèles les unes aux autres.

5. Outil de travail selon l'une des revendications précédentes, dans lequel le pied de la console (11) est réalisé sous la forme d'une construction en caisson en grande partie fermée, dans laquelle les évidements (23) destinés à recevoir la plaque d'appui du milieu (14) sont réalisés les plus petits possible, c'est-à-dire étroits et courts.

6. Outil de travail selon l'une des revendications précédentes, comprenant un châssis doté d'un mécanisme de déplacement et une superstructure disposée sur le châssis sur un axe de rotation vertical, la console étant articulée sur la superstructure, et/ou la console portant un équipement de travail, et/ou la console étant mobile par le biais de vérins hydrauliques et/ou l'outil de travail étant un outil de travail mobile, en particulier un matériel de construction, de terrassement et/ou de manutention, en particulier une pelle hydraulique.
